# EUROPÄISCHE PATENTSCHRIFT

(11) **EP 1 298 174 B1**
(45) Veröffentlichungstag und Bekanntmachung des Hinweises auf die Patenterteilung: **02.08.2006**
(21) Anmeldenummer: 01123425.9
(22) Anmeldetag: 28.09.2001
(51) Int. Cl.: C09D 125/14, C09D 133/06, C09D 151/00, C09D 5/02

(54) **Lackzusammensetzung auf Wasserbasis**
Waterborne coating composition
Composition de revêtement à base aqueuse

(43) Veröffentlichungstag der Anmeldung: 02.04.2003
(73) Patentinhaber: J.W. Ostendorf GmbH & Co. KG., 48653 Coesfeld (DE)
(72) Erfinder: Herrn Michael Ostendorf, 48653 Coesfeld (DE)
(74) Vertreter: Stenger, Watzke & Ring

(56) Entgegenhaltungen:
- EP-A- 0 029 637
- EP-A- 0 525 977
- US-A- 4 151 143

## Beschreibung

Vorliegende Erfindung betrifft eine Metallschutzlackzusammensetzung auf Wasserbasis zur Herstellung eines geschlossenen, lufttrocknenden Films auf einer Substratfläche, welcher in einem einzigen Anstrichvorgang Haftgrund, Rostschutz und Lackierung bietet, mit wenigstens einer filmbildenden, wasserverdünnbaren Komponente.

Lösemittelhaltige Schutzlacke für Metall sind seit langem im Stand der Technik bekannt. Sie enthalten in der Regel ein filmbildendes Harz, ein organisches Lösungsmittel sowie weitere übliche Lackzusätze. Organische Lösungsmittel lösen die festen oder hoch viskosen Bindemittelkomponenten ohne chemische Umsetzung auf und überführen diese in eine verarbeitbare Konsistenz. Die organischen Lösungsmittel sind jedoch flüchtig und verdampfen bei der Filmbildung aus dem Überzugsmittel als Schadstoffe in die Atmosphäre. Viele der bekannten und herkömmlich eingesetzten Lösungsmittel sind gesundheitsschädlich, so daß bei der Anwendung gewisse Sicherheitsvorkehrungen getroffen werden müssen. In Anbetracht der Tatsache, daß auch die Gesetzgebung in diesem Zusammenhang zunehmend verschärft wird, sind alternative Lösungen vonnöten.

Einen Lösungsansatz bieten Metallschutzlacke auf Wasserbasis. Bei diesen wird das als Träger für das filmbildende Polymer verwendete flüchtige organische Lösungsmittel entweder teilweise oder vollständig durch Wasser ersetzt. Jedoch ergibt sich dabei das Problem, daß der nach dem Auftragen und Trocknen gebildete Anstrichfilm wasserbeständig sein muß, um eine der Atmosphäre ausgesetzte Oberfläche effektiv zu schützen. Daher sollte der aus dem wassergelösten und damit umweltfreundlichen Bindemitteln hergestellte Anstrichfilm möglichst wasserunlöslich und hydrophob sein. Versuche, Lacke lösungsmittelfrei zu erzeugen, haben jedoch zu schlechten Ergebnissen geführt. Derartige Lacke sind nicht wetterbeständig und lassen sich nur schwer verarbeiten.

Die im Stand der Technik bekannten, wässerigen Systeme weisen daher den Nachteil auf, daß die gebildeten Beschichtungen oftmals nur unzureichende Korrosionsschutzeigenschaften aufweisen. Das Problem besteht darin, daß für wässrige Systeme Emulgatoren zur Stabilisierung der Emulsionen erforderlich sind. Diese setzen die Grenzflächenspannung zwischen den Phasen herab und verhindern das Zusammenfließen der dispergierten Teilchen. Derartige grenzflächenaktive Substanzen sind beispielsweise anionische, kationische oder auch amphotere Tenside. Die niedermolekularen, grenzflächenaktiven Substanzen, die zur Benetzung der Pigmente und zur Stabilisierung des gesamten Systems erforderlich sind, haben jedoch den Nachteil, daß aufgrund der vorhandenen hydrophilen Gruppen die Wasserbeständigkeit und, damit verbunden, der Korrosionsschutz herabgesetzt wird. Somit sind die Erfordernisse zur Herstellung eines stabilen und korrosionsbeständigen Systems schwer zu vereinen und im Stand der Technik nicht zufriedenstellend gelöst.

Zudem neigen die wäßrigen Systeme zu einer schlechteren Haftung auf nicht vorbehandelten Metalloberflächen als die lösemittelhaltigen Beschichtungen. Auch erfüllen die wasserbasierenden Systeme oftmals nicht die Anforderungen an den Glanz, so daß zur Erzielung einer glänzenden Beschichtung sowie eines verbesserten Schutzes ein Klarlack als zweite Schicht aufgetragen werden muß, was zu einer Erhöhung des Arbeitsaufwandes führt.

Der vorliegenden Erfindung lag daher die **Aufgabe** zu Grunde, eine stabile Metallschutzlackzusammensetzung auf Wasserbasis zur Verfügung zu stellen, die direkt auf Metall aufgetragen werden kann und welche mit einem Anstrich Haftgrund, Rostschutz und Lackierung bietet. Ferner sollen die resultierenden Beschichtungen gute Haftungseigenschaften auf unterschiedlichen Metallen sowie einen gute Korrosionsbeständigkeit aufweisen. Auch soll ein Verfahren zur Herstellung einer solchen Metallschutzlackzusammensetzung angegeben werden.

**Gelöst** wird diese Aufgabe durch eine Metallschutzlackzusammensetzung auf
Wasserbasis zur Herstellung eines geschlossenen, lufttrocknenden Films auf einer Substratoberfläche, mit wenigstens einer filmbildenden, wasserverdünnbaren Komponente,
**dadurch gekennzeichnet,**
- daß sie im wesentlichen Emulgatorfrei ist,
- daß sie einen Verdicker mit benetzenden Eigenschaften aufweist,
- daß die filmbildende Komponente eine wäßrige Acrylatpolymerisatdispersion ist, deren Polymerisatanteil ein Gehalt von
- 15 bis 50 Gew.-% einer Komponente A sowie
- 50 bis 85 Gew.-% einer Komponente B aufweist,
   wobei die Komponente A ein wasserverdünnbares Copolymerisat ist, welches in Wasser eine feinteilige Dispersion ergibt,
   bestehend aus wenigstens den Bestandteilen
   a1 - einem Acrylsäure- oder Methacrylsäure -C₁-C₂₀-alkylester und/oder einem Gemisch dieser Ester,
   a2 - dem oder den unter a1 aufgeführten Monomeren oder einem oder mehreren Vinylaromaten,
   a3 - zumindest einer copolymerisierbaren olefinisch ungesättigten, bis zu 10 Kohlenstoffatome enthaltenden Carbonsäure oder Carbonsäureanhydrid,
   und die Komponente B ein Lösungspolymerisat ist, welches frei von säuregruppenhaltigen Monomeren ist und welches zumindest aus den Bestandteilen a1 und a2 besteht.

Erfindungsgemäß ist die Komponente A der Acrylatpolymerisatdispersion ein wasserverdünnbares Polymerisat. Aufgrund der Tatsache, daß das Copolymerisat A nur eine möglichst geringe Anzahl an Carboxylgruppen enthält und daher nicht im üblichen Sinne wasserlöslich ist, ergibt sie nach teilweiser oder vollständiger Neutralisation mit Ammoniak ein wasserverdünnbares Polymerisat, welches im Wasser eine feinteilige Dispersion ergibt. Aufgrund der Tatsache, daß die Komponente A bereits allein einen Film mit einer guten Wasserquellfähigkeit ergibt, weist der Lack eine sehr gute Wasserfestigkeit auf. Daher ist es vorteilhaft, die Monomere so auszuwählen, daß das resultierende Copolymerisat in seinem Eigenschaftenprofil im wesentlichen durch die Acrylate und Methacrylate bestimmt wird. Die Komponente B ist für sich alleine nicht wasserverdünnbar und ist darüber hinaus frei von säuregruppenhaltigen Monomeren. Die Komponente A ist vorteilhafter Weise zu 15 bis 50 Gew.-%, vorzugsweise 22 bis 40, insbesondere 25 bis 35 Gew.-% in dem Polymerisat enthalten, die Komponente B ist vorteilhafter Weise zu 50 bis 85 Gew.-%, vorzugsweise zu 60 bis 80, besonders vorzugsweise zu 65 bis 75 Gew.-% enthalten.

Erfindungswesentlich ist, daß die Zusammensetzung im wesentlichen Emulgatorfrei ist. Im wesentlichen Emulgatorfrei im Sinne der Erfindung soll nicht insofern beschränkend aufgefaßt werden, daß überhaupt keine Emulgatoren vorhanden sein dürfen. Diese sind oftmals Bestandteil von anderen Zusätzen oder Hilfsstoffen, so daß geringe Mengen in der Metallschutzzusammensetzung durchaus vorhanden sein können. Für die Erfindung ist im wesentlichen nur entscheidend, daß zur Stabilisierung des Systems weitestgehend auf Emulgatoren verzichtet wird, welche die Wasserfestigkeit und damit die Korrosionsschutzwirkung der Zusammensetzung beeinträchtigen. Bedingt durch die Tatsache, daß die erfindungsgemäße Metallschutzlackzusammensetzung entweder gar keine externen Emulgatoren oder nur geringe Mengen an Emulgatoren aufweist, wird in vorteilhafter Weise der nachteilige Einfluß dieser Stoffe auf die Korrosionsbeständigkeit vermieden.

Die erfindungsgemäße Metallschutzzusammensetzung weist einen Verdicker mit benetzenden Eigenschaften auf. Ein solcher Verdicker ist beispiels- und vorzugsweise ein Polyurethanverdicker. Der erfindungsgemäße Verdicker wird vorzugsweise im Mahlgut eingesetzt und dient dazu, daß gesamte System zu stabilisieren. Der erfindungsgemäße Verdicker, wie beispielsweise ein Polyurethanverdicker, hat in vorteilhafter Weise nicht nur eine verdickende Wirkung, sondern er besitzt auch zum Teil benetzende Eigenschaften. Dadurch kann, wie beschrieben, auf stabilisierende Emulgatoren, die sich nachteilig auf die Korrosionsbeständigkeit der Metallschutzlackzusammensetzung auswirken, weitestgehend verzichtet werden. Es hat sich überraschender Weise gezeigt, daß durch diese benetzenden Eigenschaften die Oberfläche der im Lack vorhandenen Pigmente belegt wird. Durch diese Oberflächenbelegung werden nachteilige Wechselwirkungen zwischen Polymer und Pigment bzw. Extendern verhindert und die Verwendung eines Emulgators für diesen stabilisierenden Zweck ist nicht mehr zwingend erforderlich. Die synthetischen, relativ niedermolekularen Verdicker basieren z.B. auf wasserlöslichen Polyurethanen und werden dann hergestellt durch Reaktion von Diisocyanaten mit Diolen und hydrophoben Blockierungskomponenten. Im Molekül können hydrophobe und hydrophile Bereiche unterschieden werden, wobei die Zusammensetzung des hydrophoben Segments auch von großer Bedeutung für die viskositätserhöhenden Eigenschaften, besonders für das Adsorptionsverhalten, ist. Der äußerst vorteilhafte Effekt auf die erfindungsgemäße Zusammensetzung ist wohl darauf zurückzuführen, daß bei einem Assoziativ-Verdicker wie einem Polyurethanverdicker die hydrophoben Segmente des Moleküls nicht nur an der Oberfläche der Polymerdispersionsteilchen adsorbieren, sondern auch an der Oberfläche von Feststoffteilchen wie Pigmenten und Extendern. Bedingt durch die Tatsache, daß die hydrophoben Gruppen bei dem Verdicker überwiegen, ist in vorteilhafter Weise gleichzeitig ein hoher Korrosionsschutz des trockenen Lackes gewährleistet. Durch den Einsatz eines Verdickers mit benetzenden Eigenschaften, wie einem Polyurethanverdicker, wird daher nicht nur in vorteilhafter Weise ermöglicht, daß auf sich auf die Korrosionsbeständigkeit nachteilig auswirkende Emulgatoren weitestgehend verzichtet werden kann, sondern der Korrosionsschutz wird zudem verstärkt.

Es hat sich gezeigt, daß durch die Erfindung eine Metallschutzlackzusammensetzung für den Heimwerkerbedarf zur Verfügung gestellt wird, die vorteilhafte Eigenschaften aufweist. So überkommt die erfindungsgemäße Schutzlackzusammensetzung in vorteilhafter Weise die im Stand der Technik bekannten Nachteile. Mit der Erfindung wird ein Metallschutzlack zur Verfügung gestellt, der in einem Anstrichvorgang Haftgrund, Rostschutz und Lackierung bietet. Es hat sich in vorteilhafter Weise gezeigt, daß die erfindungsgemäße Metallschutzlackzusammensetzung nicht nur ein gutes Aussehen aufweist, sondern zudem sehr gute Haftungseigenschaften auf den unterschiedlichsten metallischen Untergründen bietet. So kann der Metallschutzlack auf die verschiedensten Substrate appliziert werden, wie auf Stahl und andere Metalle, wie beispielsweise verzinkter Stahl oder Aluminium.

Die erfindungsgemäße Metallschutzlackzusammensetzung weist aufgrund ihrer besonderen Formulierung in vorteilhafter Weise eine gute Sperrwirkung gegen Wasser, Sauerstoff und andere Elektrolyte auf, wodurch sich verbesserte Korrosionsschutzeigenschaften ergeben. Diese hervorragende Korrosionsbeständigkeit konnte im Salzsprühtest gezeigt werden. Auch weist er sehr gute Witterungseigenschaften und gute Elastizitätswerte auf. Er zeigt zudem eine gute Standfestigkeit, eine gute Kantenabdeckung des Untergrundes, eine gleichmäßige Beschichtung und einen guten Verlauf. Auch trocknet der erfindungsgemäße Metallschutzlack bei einer Umgebungstemperatur von wenigstens 10°C rasch bis zur Staubtrockenheit, dies zumeist innerhalb ca. 60 min.

Die erfindungsgemäße Metallschutzlackzusammensetzung ist durch ihre vorteilhaften Eigenschaften den im Stand der Technik bekannten Heimwerkerprodukten bei weitem überlegen. Zudem weist die erfindungsgemäße Metallschutzlackzusammensetzung eine sehr gute Applizierbarkeit mit dem Pinsel oder der Rolle auf, was ihn vielseitig und einfach einsetzbar macht. Die Notwendigkeit für Haftgrund oder Spezialverdünnungen entfällt; mit einem Anstrichvorgang lassen sich der richtige Haftgrund, der zuverlässige Korrosionsschutz und eine dekorative Lackierung erzielen. Durch die erfindungsgemäße Metallschutzlackzusammensetzung werden ferner aufwendige Vorbehandlungen der zu streichenden Oberflächen überflüssig, da er auch direkt auf Rost aufgetragen werden kann. So zeigte sich, daß die erfindungsgemäße Metallschutzlackzusammensetzung sowohl auf korrodierenden als auch auf blankem Metall gut haftet. Die Erfindung liefert daher eine Metallschutzlackzusammensetzung mit hervorragenden Eigenschaften, die vielseitig einsetzbar ist und welche die im Stand der Technik bekannten Nachteile der wäßrigen Systeme überkommt. Dabei kann die Zusammensetzung ferner zur Herstellung einer Grundierung, einer Decklackierung auf Grundierungen und/oder Füllern oder eben zur Herstellung eines Einschichtlacks verwendet werden.

Das vorzugsweise als Verdicker mit benetzenden Eigenschaften einzusetzende Polyurethanharz ist vorzugsweise mit einem Anteil an 0,3 bis 5 Gew.-%, besonders bevorzugt 0,5 bis 3 Gew.-%, in der Metallschutzlackzusammensetzung enthalten.

Das Polymerisat der filmbildenden Komponente ist in vorteilhafter Weise eine homogene Mischung aus den Komponenten A und B. Dabei ist es vorteilhaft, wenn sich die Glastemperaturen der Komponenten A und B nicht zu stark unterscheiden, da die Mischung aus den Komponenten A und B sonstenfalls unter Umständen nicht homogen wäre. Um dies zu vermeiden, sollten die Glastemperaturen sich um nicht mehr als 30 bis 40 °C, vorzugsweise um nicht mehr als 30 °C unterscheiden, damit eine homogene Mischung erzielbar bleibt.

### Zu den Aufbaukomponenten der Komponenten A und B ist folgendes auszuführen:

Als Ester der Acrylsäure oder Methacrylsäure mit 1 bis 20 Kohlenstoffatome enthaltenden gradkettigen oder verzweigten Monoalkoholen, a1, eignen sich z.B. Substanzen wie Methylacrylat, Ethylacrylat, Isopropylacrylat, Methylmethacrylat, n-Butylacrylat, n-Butylmethacrylat, Isobutylacrylat, Isobutylmethacrylat, tert.-Butylacrylat, 2-Ethylhexylacrylat, 2-Ethylhexylmethacrylat, Laurylacrylat sowie deren Gemische. Bevorzugt sind n-Butylacrylat und Methylmethacrylat.

Als Vinylaromaten im Bestandteil a2 eignen sich beispielsweise Vinyltoluol und vorzugsweise Styrol und dergleichen. Diese können die (Meth)-acrylsäureester der a1 teilweise ersetzen.

Als Bestandteil a3 kommen copolymerisierbare olefinisch ungesättigte, bis zu 10 Kohlenstoffatome enthaltende Carbonsäuren oder Carbonsäureanhydride in Frage, z.B. Acrylsäure, Methacrylsäure, Maleinsäure, Itaconsäure, bzw. die Anhydride oder Halbester dieser Carbonsäuren. Die Anhydridgruppen der Copolymerisate können vor dem Neutralisieren mit Ammoniak, beispielsweise durch Erwärmen mit 1 bis 8 Kohlenstoffatome enthaltenden Alkoholen oder Glykolethern in die entsprechenden Halbestergruppen überführt werden. Beispiele für solche Alkohole bzw. Glykolether sind Ethanol, Isopropanol, Butanol und Butylglykol. Vorzugsweise werden Acrylsäure, Methacrylsäure, und Itaconsäure verwendet. Die Komponente a3 ist im Copolymerisat A in Mengen von 1,5 bis 15, vorzugsweise 5 bis 13 Gew.-% einpolymerisiert. Besonders bevorzugt sind 5 bis 12 Gew.-% Acrylsäure und/oder Methacrylsäure. Die Komponente B weist den Bestandteil a3 nicht auf.

Gemäß einer weiteren Ausführungsform können die Komponenten A und/oder B als weiteren Bestandteil wenigstens eine weitere copolymerisierbare Verbindung aufweisen (a4). Bei dem Bestandteil a4 handelt es sich um weitere, unter a1 bis a3 nicht genannte copolymerisierbare, olefinisch ungesättigte Verbindungen. Es sind beispielsweise Mono(meth)-acrylate von Alkandiolen, wie Hydroxyethyl- und Hydroxypropyl(meth)acrylat sowie Butandiolmono(meth)acrylat, (Meth)acrylamid und/oder (Meth)acrylnitril. Diese Monomere können, falls erforderlich, zur Einstellung spezieller Eigenschaften dienen. Ferner können als Bestandteil a4 verwendet werden Vinylether, Vinylester, Diester der Maleinsäure, Citraconsäure oder Mesaconsäure mit gegebenenfalls Ether- oder Thioethergruppen enthaltenden Monoalkoholen mit 1 bis 20 Kohlenstoffatomen. Weiterhin können Monoolefine mit 3 bis 20 Kohlenstoffatomen, wie Propen, Buten, Penten, Hexen, Isobuten sowie Diolefine, wie Butadien und Isopren verwendet werden.

Dabei ist zu beachten, daß polare funktionelle Gruppen, wie sie in dem Bestandteil a4 enthalten sein können, z.B. Hydroxy- oder Ethergruppen, die Polymerdispersionen zusätzlich stabilisieren. Jedoch können diese polare Gruppen auch die Wasserfestigkeit der aus den erfindungsgemäß verwendeten Dispersionen erhaltenen Filme ungünstig beeinflussen. Daher kann es, in Abhängigkeit von der zu erzielenden Wasserfestigkeit, unter Umständen vorteilhaft sein, auf den Bestandteil a4 zu verzichten.

Gemäß einer vorteilhaften Ausführungsform der vorliegenden Erfindung weist das Copolymerisat A ein Gehalt von 25 bis 98,5 Gew.-% an a1, 0 bis 60 Gew.-% an a2, 1,5 bis 15 Gew.-% an a3 sowie 0 bis 30 Gew.-% an a4 auf. Diese Konzentrationsverhältnisse haben sich als besonders vorteilhaft für den Einsatz im erfindungsgemäßen Metallschutzlackes erwiesen.

Gemäß einer vorteilhaften Weiterbildung ist die Komponente B ein Lösungsmittelpolymerisat, welches ausschließlich aus den Bestandteilen a1, a2 und a4 besteht, wobei die Summe der Komponenten 100% beträgt.

Gemäß einer vorteilhaften Weiterbildung der Erfindung beträgt bei einem Gehalt von weniger als 10 Gew.-% an Vinylaromaten in der Komponente A, die Säurezahl der Komponente A insgesamt maximal 75 mg KOH/g Feststoff, vorzugsweise 54 bis 65 mg KOH/g Feststoff. Ferner beträgt die Säurezahl der Mischung der Komponenten A und B insgesamt maximal 30 mg KOH/g Feststoff, vorzugsweise 12 bis 27 mg KOH/g Feststoff. Sofern ein Gehalt an Vinylaromaten von 10 bis 60 Gew.-% in der Komponente A vorliegt, beträgt die Säurezahl der Komponente A maximal 95 mg KOH/g Feststoff, vorzugsweise 62 bis 94 mg KOH/g Feststoff und die Säurezahl der Mischung der Komponenten A und B maximal 50 mg KOH/g Feststoff, vorzugsweise 20 bis 47 mg KOH/g Feststoff.

Gemäß einer vorteilhaften Weiterbildung der Erfindung ist die Polymerisathärte durch die Auswahl von hart- und weichmachenden Monomeren steuerbar. Dadurch können die Dispersionen gezielt an den jeweiligen Verwendungszweck in einfacher Weise angepaßt werden. Ferner lassen sich auch andere Eigenschaften der Dispersion durch Wahl der Comonomerzusammensetzung, insbesondere des Bestandteils a1 in den Komponenten A und B, steuern. So lassen sich beispielsweise die Mindestfilmbildetemperatur, die Filmflexibilität oder die Filmhärte verändern. Dadurch kann die erfindungsgemäße Metallschutzlackzusammensetzung für die unterschiedlichsten Anwendungen und an die unterschiedlichen, auf ihn einwirkenden Belastungen angepaßt werden.

Im allgemeinen ist es vorteilhaft, daß die Acrylatpolymerisatdispersion einen Festkörpergehalt von 40 bis 60 Gew.-%, vorzugsweise von 45 bis 55 Gew.-% aufweist.

Der pH-Wert der Acrylatpolymerisatdispersion liegt zwischen 6,8 und 10, vorzugsweise zwischen 7 und 9. Der Metallschutzlack kann zudem einen Stabilisator aufweisen, um einen pH-Wert von mehr als 7,2 bis ca. 10 zu erzielen. Geeignete pH-Stabilisatoren sind beispielsweise Ammoniak, Triethlyamin, Triethanolamin u.a..

Die Metallschutzlackzusammensetzung enthält bevorzugt 5 bis 70 Gew.-%, besonders bevorzugt 7 bis 40 Gew.-%, des filmbildenden Acrylatpolymers als Feststoff. Dabei ist die einzusetzende Menge an Filmbildner abhängig vom Farbton und wird dementsprechend gewählt.

Des weiteren enthält die Metallschutzlackzusammensetzung 10 bis 95 Gew.-% Wasser, vorzugsweise 20 bis 70 Gew.-% Wasser, insbesondere bevorzugt 50 bis 70 Gew.-%, bezogen auf das Gewicht der Metallschutzlackzusammensetzung.

Gemäß einer Ausführungsform enthält die Metallschutzlackzusammensetzung 0 bis 50 Gew.-%, bevorzugt 0 bis 20 Gew.-%, mindestens eines wasserlöslichen, polaren organischen Lösungsmittels. Beispiele für geeignete wasserlösliche, polare organische Lösungsmittel sind niedrige, alipathische, einwertige Alkohole, wie beispielsweise Methanol, Ethanol, n-Propanol, Isopropanol, n-Butanol, Pentanole, Hexanole, Glykolether, Ester, Ketone und gewisse modifizierte Alkohole, wie z.B. Monoalkylether von Ethylen- oder Propylenglykol, beispielsweise Propylenglykolmethylether und Propylenglykolmethylethylether, Diacetonalkohol und Esteralkohole. Diese wasserlöslichen, polaren organischen Lösungsmittel unterstützen die Filmbildung und die Wasserlöslichmachung des Polymers. Ferner führen sie zur Trocknungsbeschleunigung und Verbesserung der Verarbeitungseigenschaften bei der Streich- und Rollapplikation.

Des weiteren kann der erfindungsgemäße Metallschutzlack noch andere übliche Zusätze in üblichen Mengen enthalten, so beispielsweise wenigstens ein schwerwasserlösliches organisches Lösungsmittel (0 bis 15 Gew.-%, vorzugsweise 2 bis 10 Gew.-%, insbesondere 2 bis 5 Gew.-%), sowie wenigstens einen pH-Stabilisator (0 bis 2 Gew.-%, vorzugsweise 0,2 bis 1 Gew.-%). Die Prozentangaben beziehen sich auf das Gewicht der Metallschutzlackzusammensetzung. Die Aufzählung ist nicht abschließend.

Beispiele für geeignete schwerlösliche, organische Lösungsmittel sind alipathische Kohlenwasserstoffe, wie z.B. Benzin oder Testbenzin, Dipten, höhere alipathische Alkohole, wie beispielsweise Ethylhexanol, Isodecanol sowie Isononanol, Propylenglykol, Dipropylenglykol, Triethylenglykol, Tripropylenglykol u.ä.

Der Entschäumer kann hinzugegeben werden, um die Oberflächenspannung der Zusammensetzung zu verändern. Dadurch wird in vorteilhafter Weise das leichte Austreten von ungelösten Gasen nach dem Aufbringen des Metallschutzlackes auf das Substrat ermöglicht. Ferner kann so dem Detergenseffekt der in dem Metallschutzlack vorhandenen oberflächenaktiven Mitteln entgegengewirkt werden. Geeignet sind beispielsweise nicht-ionogene Netzmittel.

Ferner kann der Metallschutzlack noch ein oder mehrere Füllstoffe in üblichen Mengen, bevorzugt bis zu 40 Gew.-% bezogen auf das Gewicht des Metallschutzlackes, enthalten. Zu nennen sind beispielsweise Quarzmehl, Kreide, Talkum, Bariumsulfat, Silikate, Siliciumdioxid u.ä.

Selbstverständlich können dem erfindungsgemäßen Metallschutzlack noch weitere übliche Hilfs- und Zusatzstoffe in üblichen Mengen, bevorzugt 0,1 bis 10 Gew.-% bezogen auf das Gewicht der Metallschutzlackzusammensetzung, enthalten. So beispielsweise Weichmacher, wie Dioctylphthalat, weitere Verdickungsmittel bzw. Thioxtropiemittel, wie z.B. organisch modifizierte Bentonite, bedingt Korrosionsinhibitoren, wie z.B. das Bariumsalz der Alkylnaphtalinsulfonsäure, Gleitmittel, Verlaufsmittel u.ä..

In vorteilhafter Weise kann der erfindungsgemäße Metallschutzlack pigmentiert oder in Form eines Klarlackes in glänzender oder mattierter Form eingesetzt werden. Dabei zeichnet sich der erfindungsgemäße Metallschutzlack durch eine hohe Glanzstabilität aus. Wenn ein Pigment zur Färbung eingesetzt wird, dann können bis zu 30 Gew.-% jeweils bezogen auf das Gewicht der Metallschutzlackzusammensetzung, von dem oder den Pigmenten verwendet werden. Beispiele für geeignete Pigmente sind die üblicherweise in Beschichtungsmitteln eingesetzten Pigmente, wie beispielsweise Titandioxid, Ruß, Metalloxid-Glimmer-Pigmente, Aluminiumpigmente u.ä..

Es ist erfindungsgemäß außerordentlich vorteilhaft, bei der Formulierung pigmentierter Lacke auf bestimmte Metallionen zu verzichten. Solche sind beispielsweise Zink- und Eisenhaltige Pigmente, Extender und Korrosionsschutzpigmente. Bei Verwendung derartiger Verbindungen kann es zu Reaktionen mit dem Bindemittel kommen, was in nachteiliger Weise zur Koagulation der Polymerdispersion führt. Um dies zu verhindern sollte vorzugsweise auf diese Verbindungen verzichtet werden.

Die Anwesenheit eines Pigments erfordert üblicher Weise die Zugabe eines oder mehrerer oberflächenaktiven Mittel, um die Suspendierung des Pigments im flüssigen Träger sicherzustellen. Vorliegend wird dies insbesondere durch den Einsatz eines Verdickers mit benetzenden Eigenschaften, wie einen Polyurethanverdicker, bewirkt. Jedoch kann es vorteilhaft sein, weitere oberflächenaktiven Mittel in einer Menge bis zu 5 Gew.-%, vorzugsweise 0,2 bis 2 Gew.-%, bezogen auf das Gewicht des Metallschutzlackes, einzusetzen. Geeignete oberflächenaktive Mittel sind beispielsweise die Salze einer polymeren Carboxylsäure, Salze eines Acrylpolymers, modifizierte Alkylpolyether u.ä.

Die Erfindung soll anhand einiger nicht beschränkender Ausführungsbeispiele erläutert werden. Alle Angaben über Teile und Prozente sind dabei Gewichtsangaben, falls nicht ausdrücklich etwas anderes festgestellt wird.

Das Verfahren der Polymerisation ist dem Fachmann bekannt, so daß auf die für die jeweiligen Aufbaukomponenten geeigneten Bedingungen hier nicht näher eingegangen werden soll.

Die Polymerisation erfolgt zweckmäßiger Weise in Gegenwart von 0,3 bis 5,0, vorzugsweise 0,5 bis 3,0 Gew.-%, bezogen auf die Summe der Monomere a1 bis a4, an radikalbildender Initiatoren, wie beispielsweise Azobiscarbonsäureamide, Azobiscarbonsäurenitrile oder Peroxide; im allgemeinen bei Temperaturen zwischen 50 und 150 °C, vorzugsweise zwischen 80 und 130 °C, gegebenenfalls in Gegenwart von Reglern, wie beispielsweise Mercaptoethanol, Tertiärdodecylmercaptan oder Diisopropylxanthogendisulfid, welche in Mengen von 0 bis 3 Gew.-% bezogen auf die Summe der Monomere a1 bis a4 vorhanden sein können.

Es ist an sich nicht kritisch, ob zuerst die Komponente A und dann die Komponente B polymerisiert wird oder umgekehrt. Für das erfindungsgemäß zu verwendende Copolymerisat ist nur wesentlich, daß in mindestens einer Stufe das darin angewandte Monomer (A) als solches, oder die darin angewandte Monomermischung (AB) als solche, ein wasserlösliches oder wasserdispergierbares Polymerisat oder Copolymerisat bildet. Es ist jedoch äußerst vorteilhaft, wenn zunächst die Komponente A und anschließend die Komponente B polymerisiert. Die beiden Komponenten vorzugsweise eine homogene Mischung. Die zuerst hergestellte Komponente wird weitest gehend, d.h. zu mehr als 95%, vorzugsweise zu mehr als 99%, auspolymerisiert, bevor mit der Polymerisation der zweiten Komponente begonnen wird. Dies ist aus dem Grunde vorteilhaft, da durch Restmonomere der ersten Komponente, insbesondere säuregruppenhaltige, sich die Zusammensetzung der zweiten Komponente verändern, was zu einer Verschlechterung der anwendungstechnischen Eigenschaften, insbesondere zu einer Verstärkung der Viskositätsabhängigkeit vom pH-Wert führen würde.

Die auspolymerisierten Copolymerisatlösungen, welche dem resultierenden Gemisch der Komponenten A und B entsprechen, werden entweder durch Zumischen von Ammoniak und Verdünnen mit Wasser in Dispersionen überführt, oder man rührt das auspolymerisierte Copolymerisat bzw. die auspolymerisierte Copolymerisatlösung langsam in eine wäßrige Ammoniaklösung ein und erhält dadurch eine Dispersion.

Die so erhaltenen Dispersionen können entsprechend dem Lösungsmittelgehalt des aus A und B zusammengesetzten Polymerisats unter Umständen noch mehr als die statthafte Menge an organischen Lösungsmitteln enthalten. Ein solcher Überschuß wird gegebenenfalls destillativ, vorzugsweise durch Vakuumdestillation, aus den Dispersionen entfernt, wobei das Lösungsmittel zurückgewonnen werden kann. Der Neutralisationsgrad der Dispersionen beträgt 10 bis 150%, vorzugsweise 15 bis 100%, besonders bevorzugt 40 bis 70%. Der pH-Wert der Dispersionen kann demnach zwischen 6,8 und 10, vorzugsweise zwischen 7 und 9 betragen.

Von dem als Neutralisationsmittel dienenden Ammoniak kann zur Erzielung bestimmter Effekte ein Teil des für die Neutralisation erforderlichen Ammoniaks durch organische Amine, insbesondere Triethylamin, ersetzt werden. Vorzugsweise wird nur ein geringer Teil, vorzugsweise nicht mehr als 10 Gew.-%, ersetzt. Solche Zusätze können die Wasserquellbarkeit und die Wasserdurchlässigkeit der Anstriche erhöhen.

### 1. Herstellung eines weißen, glänzenden wäßrigen Metallschutzlacks

Die folgenden Komponenten werden unter langsamen Rühren eingewogen:

| | |
|---|---|
| 10 | Teile Wasser |
| 0,5 | Teile eines handelsüblichen Netzmittels |
| 0,1 | Teile 15 %iger Ammoniak |
| 0,4 | Teile eines handelsüblichen Entschäumers |
| 4,0 | Teile Butylglykol |
| 25,0 | Teile Titandioxid |
| 7,0 | Teile Bariumsulfat |

Die Mischung wird 15 Minuten unter einem Dissolver auf eine Hegmann-Feinheit < 10 µm dispergiert. Danach werden 52,0 Teile der Acrylatdispersion und 1,0 Teil eines Polyurethanverdickers zugegeben. Mit 15 %igem Ammoniak wird ein pH-Wert von 8,5 bis 9 eingestellt.

Die Herstellung der Metallschutzlackzusammensetzung erfolgte in Edelstahlgeräten, um Metallkontaminationen aus den Produktionsaggregaten zu vermeiden. Die so erhaltende Anstrichzusammensetzung wurde dann abgefüllt. Sie weist eine sehr gute Lagerstabilität auf. Sowohl nach Lagerung von 3 Monaten bei 50°C, als auch bei Lagerung von 12 Monaten bei Raumtemperatur traten keine Veränderung in der Metallschutzlackzusammensetzung auf.

Der erfindungsgemäße Metallschutzlack wies ferner eine sehr gute Applizierbarkeit mit dem Pinsel oder der Rolle auf. Er zeigte eine gute Standfestigkeit, eine gute Kantenabdeckung des Untergrundes, eine gleichmäßige Beschichtung und einen guten Verlauf.

Zur Prüfung der technischen Eigenschaften wurde die Metallschutzlackzusammensetzung ferner auf ein Stahlblech, welches zuvor mit einem handelsüblichen Metallreiniger entfettet wurde, in einer Schichtdicke von 50 my appliziert. Die resultierenden Beschichtungen wurden 7 Tage bei Raumtemperatur gelagert und danach verschiedenen Prüfungen unterzogen. Die Prüfergebnisse sind in Tabelle 1a und 1b dargestellt.

**Tabelle 1 a. Flüssiglack**

| ICI-Viskosität (Poise) | 1,8 bis 2,2 |
|---|---|
| Trocknung | |
| a. Staubtrocken | ca. 1 h |
| b. Griffestigkeit | 6 bis 8 h |

**Tabelle 1 b. Trockenfilm**

| | |
|---|---|
| Untergrund | Stahlblech, entfettet |
| Schichtdicke | 50 µm |
| Haftung Gitterschnitt nach EN-ISO 2409 | Gt0 |
| Pendelhärte nach 7 Tagen Trocknung | > 30 |
| Korrosionsschutz Salzsprühtest DIN 50021 SS | 1000h |

### 2. Herstellung eines schwarzen, wäßrigen Metallschutzlacks

Die folgenden Komponenten wurden unter langsamen Rühren eingewogen:

| | |
|---|---|
| 8,0 | Teile Wasser |
| 0,6 | Teile eines handelsüblichen Netzmittels |
| 0,2 | Teile 15%iger Ammoniak |
| 0,5 | Teile eines handelsüblichen Entschäumers |
| 5,0 | Teile Butylglykol |
| 13,0 | Teile einer handelsüblichen Schwarzpaste |
| 15,0 | Teile Bariumsulfat |
| 56,7 | Teile der Acrylatdispersion |
| 1,0 | Teil eines Polyurethanverdickers |

Mit 15%igem Ammoniak wird ein pH-Wert von 8,5 bis 9,0 eingestellt. Die Herstellung des Metallschutzlackes erfolgte dabei in Edelstahlgeräten, um sicherzustellen, daß keine Metallkontamination aus den Produktionsaggregaten erfolgt.

Die so erhaltene Anstrichzusammensetzung wurde dann abgefüllt. Sie weist eine sehr gute Lagerstabilität auf. Sowohl nach Lagerung von 3 Monaten bei 50°C als auch nach Lagerung von 12 Monaten bei Umgebungstemperaturen traten keine Veränderungen des Metallschutzlackes auf.

Der Metallschutzlack zeigte ferner eine sehr gute Applizierbarkeit mit dem Pinsel oder der Rolle sowie eine gute Standfestigkeit, eine gute Kantenabdeckung des Untergrundes, eine gleichmäßige Beschichtung und einen guten Verlauf.

Zur Prüfung der technischen Eigenschaften wurde der Metallschutzlack ferner auf einem Stahlblech, welches zuvor mit einem handelsüblichen Metallreiniger entfettet wurde, in einer Schichtdicke von 50 my appliziert. Die resultierenden Beschichtungen wurden 7 Tage bei Raumtemperatur gelagert und danach verschiedenen Prüfungen unterzogen. Die Prüfergebnisse sind in den Tabellen 2a und 2b dargestellt.

**Tabelle 2a. Flüssiglack**

| ICI-Viskosität (Poise) | 1,8 bis 2,2 |
|---|---|
| Trocknung | |
| a. Staubtrocken | ca. 1,5 h |
| b. Griffestigkeit | 6 bis 8 h |

=

**Tabelle 2 b. Trockenfilm**

| | |
|---|---|
| Untergrund | Stahlblech, entfettet |
| Schichtdicke | 50 µm |
| Haftung Gitterschnitt nach EN-ISO 2409 | Gt0 |
| Pendelhärte nach 7 Tagen Trocknung | > 30 |
| Korrosionsschutz Salzsprühtest DIN 50021 SS | 1000h |

### 3. Herstellung eines farblosen, seidenmatten wäßrigen Metallschutzlacks

Die nachfolgenden Komponenten wurden zur Herstellung des Lackes eingewogen:

| Rohstoffe | Menge/kg |
|---|---|
| Wasser | 84,33 |
| Propylenglykol | 20,18 |
| Ammoniak 15% | 1,67 |
| Dipropylenglykol(mono)methylether | 10,63 |
| Mischung aus Polysiloxanen und hydrophoben Feststoffen (erhältlich unter dem Handelsnamen Byk 024) | 2,84 |
| Methylendiaminomethyletherpolykonden sat | 19,47 |
| Polyurethanverdicker | 14,88 |
| Acrylatdispersion | 780,75 |
| 2,2,4-Trimethylpentan-1,3-diolmonoisobutyrat | 52,15 |
| Alkanolaminphosphat | 12,62 |
| Methylisothiazolinon | 0,48 |

Die ersten 7 Komponenten wurden als Dispergiergut eingesetzt, die restlichen dienten dem auflacken. Ansonsten wurde verfahrenstechnisch so vorgegangen, wie bei den Beispielen 2 und 3 erläutert. Auch diese Metallschutzlackzusammensetzung zeigt die dargelegten hervorragenden Eigenschaften bezüglich der Korrosionsbeständigkeit, Haftung auf dem Grundmaterial sowie einfache Applizierbarkeit.

## Patentansprüche

1. Metallschutzlackzusammensetzung auf Wasserbasis zur Herstellung eines geschlossenen, lufttrocknenden Films auf einer Substratoberfläche, mit wenigstens einer filmbildenden, wasserverdünnbaren Komponente,
**dadurch gekennzeichnet,**
- **daß** sie im wesentlichen Emulgatorfrei ist,
- **daß** sie ein Verdickungsmittel mit benetzenden Eigenschaften aufweist,
- **daß** die filmbildende Komponente eine wäßrige Acrylatpolymerisatdispersion ist, deren Polymerisatanteil ein Gehalt von
- 15 bis 50 Gew.-% einer Komponente A sowie
- 50 bis 85 Gew.-% einer Komponente B aufweist,
wobei die Komponente A ein wasserverdünnbares Copolymerisat ist, welches in Wasser eine feinteilige Dispersion ergibt, bestehend aus wenigstens den Bestandteilen
a1 - einem Acrylsäure- oder Methacrylsäure -C₁-C₂₀-alkylester und/oder einem Gemisch dieser Ester,
a2 - dem oder den unter a1 aufgeführten Monomeren und einem oder mehreren Vinylaromaten,
a3 - zumindest einer copolymerisierbaren olefinisch ungesättigten, bis zu 10 Kohlenstoffatome enthaltenden Carbonsäure oder Carbonsäureanhydrid,
und die Komponente B ein Lösungspolymerisat ist, welches frei von säuregruppenhaltigen Monomeren ist und welches zumindest aus den Bestandteilen a1 und a2 besteht.

2. Metallschutzlackz sammensetzung nach Anspruch 1, **dadurch gekennzeichnet, dass** als Verdickungsmittel ein Polyurethanharz mit benetzenden Eigenschaften eingesetzt wird.

3. Metallschutzlackzusammensetzung nach Anspruch 1 oder 2, **dadurch gekennzeichnet, daß** die Komponenten A und Komponenten B als weiteren Bestandteil wenigstens eine weitere copolymerisierbare Verbindung aufweisen (a4), wobei es sich bei dem Bestandteil a4 um copolymerisierbare, olefinisch ungesättigte Verbindungen handelt, die nicht unter a1 bis a3 fallen.

4. Metallschutzlackzusammensetzung nach einem oder mehreren der Ansprüche 1 bis 3, **dadurch gekennzeichnet, daß** sich die Glastemperaturen der Komponenten A und B um nicht mehr als 30 bis 40°C unterscheiden.

5. Metallschutzlackzusammensetzung nach Anspruch 3 und 4, **dadurch gekennzeichnet, daß** das Copolymerisat A ein Gehalt von
- 25 bis 98,5 Gew.-% an a1,
- 0 bis 60 Gew.-% an a2,
- 1,5 bis 15 Gew.-% an a3,
- 0 bis 30 Gew.-% an a4 aufweist.

6. Metallschutzlackzusammensetzung nach einem oder mehreren der Ansprüche 3 bis 5, **dadurch gekennzeichnet, daß** die Komponente B ein Lösungspolymerisat ist, welches ausschließlich aus den Bestandteilen a1, a2 und a4 besteht.

7. Metallschutzlackzusammensetzung nach einem oder mehreren der Ansprüche 1 bis 6, **dadurch gekennzeichnet, daß** bei einem Gehalt von weniger als 10 Gew.-% an Vinylaromaten in der Komponente A, die Säurezahl der Komponente A maximal 75 mg KOH/g Feststoff, vorzugsweise 54 bis 65 mg KOH/g Feststoff, beträgt und ferner die Säurezahl der Mischung der Komponenten A und B maximal 30 mg KOH/g Feststoff, vorzugsweise 12 bis 27 mg KOH/g Feststoff, beträgt.

8. Metallschutzlackzusammensetzung nach einem oder mehreren der Ansprüche 1 bis 7, **dadurch gekennzeichnet, daß** bei einem Gehalt von 10 bis 60 Gew.-% an Vinylaromaten in der Komponente A die Säurezahl der Komponente A maximal 95 mg KOH/g Feststoff, vorzugsweise 62 bis 94 mg KOH/g Feststoff beträgt und die Säurezahl der Mischung der Komponenten A und B maximal 50 mg KOH/g Feststoff, vorzugsweise 20 bis 47 mg KOH/g Feststoff beträgt.

9. Metallschutzlackzusammensetzung nach einem oder mehreren der Ansprüche 1 bis 8, **dadurch gekennzeichnet, daß** sie 5 bis 70 Gew.-%, vorzugsweise 7 bis 40 Gew.-% des filmbildenden Acrylatpolymers aufweist.

10. Metallschutzlackzusammensetzung nach einem oder mehreren der Ansprüche 1 bis 9, **dadurch gekennzeichnet, daß** die eingesetzte Menge an Filmbildner in Abhängigkeit vom zu erzielenden Farbton der Metallschutzlackzusammensetzung wählbar ist.

11. Metallschutzlackzusammensetzung nach einem oder mehreren der Ansprüche 1 bis 10, **dadurch gekennzeichnet, daß** sie 10 bis 95 Gew.-%, vorzugsweise 20 bis 70 Gew.-%, Wasser enthält.

12. Metallschutzlackzusammensetzung nach einem oder mehreren der Ansprüche 1 bis 11, **dadurch gekennzeichnet, daß** sie ein Gehalt von 0 bis 55 Gew.-%, vorzugsweise 0 bis 20 Gew.-% an mindestens einem wasserlöslichen, polaren organischen Lösungsmittel aufweist.

13. Metallschutzlackzusammensetzung nach einem oder mehreren der Ansprüche 1 bis 12, **dadurch gekennzeichnet, daß** sie ein oder mehrere weitere Zusätze aufweist, wie
- wenigstens ein schwerwassedösliches organisches Lösungsmittel (0 bis 15 Gew.-%, vorzugsweise 2 bis 10 Gew.-%)
- wenigstens einen pH-Stabilisator (0 bis 2 Gew.-%, vorzugsweise 0,2 bis 1 Gew.-%)
- Füllstoffe ( bis zu 40 Gew.-%)
- wenigstens einen weiteren Zusatz aus der Gruppe Weichmacher, Verdickungsmittel, Gleitmittel und/oder Verlaufsmittel (0,1 bis 10 Gew.-%).

14. Metallschutzlackzusammensetzung nach einem oder mehreren der Ansprüche 1 bis 13, **dadurch gekennzeichnet, daß** sie den Verdicker mit benetzenden Eigenschaften zu einem Anteil von 0,3 bis 5 Gew.-%, vorzugsweise 0,5 bis 3-Gew.-%, aufweist.

15. Verwendung einer Zusammensetzung nach einem oder mehreren der Ansprüche 1 bis 13 zur Herstellung einer Grundierung, Decklackierung und/oder zur Herstellung eines Einschichtlacks.

## Claims

1. Water-based metal protective varnish composition for producing a closed air-drying film on the surface of a substrate, with at least one film-forming component which is dilutable in water, **characterised in that**
- it is substantially free of emulsifier,
- it has a thickening agent with wetting properties,
- the film-forming component is an aqueous acrylate polymerisate dispersion, the polymerisate fraction of which has a content of
- 15 to 50% by weight of a component A and
- 50 to 85% of a component B,
wherein the component A is a water-dilutable copolymerisate which produces a finely divided dispersion in water,
comprising at least the following constituents
a1 - an acrylic or methacrylic acid -C₁-C₂₀-alkyl ester and/or a mixture of these esters,
a2 - the monomer(s) referred to under a1 and one or more vinyl aromatics,
a3 - at least one copolymerisable olefinically unsaturated carboxylic acid containing up to 10 carbon atoms or carboxylic acid anhydride,
and the component B is a solution polymerisate which is free of monomers containing acid groups and which comprises at least the constituents a1 and a2.

2. Metal protective varnish composition as claimed in Claim 1, **characterised in that** a polyurethane resin with wetting properties is used as the thickening agent.

3. Metal protective varnish composition as claimed in Claim 1 or 2, **characterised in that** the components A and components B have as a further constituent at least one further copolymerisable compound (a4), wherein the constituent a4 comprises copolymerisable olefinically unsaturated compounds which do not come under a1 to a3.

4. Metal protective varnish composition as claimed in one or more of Claims 1 to 3, **characterised in that** the glass temperatures of the components A and B differ by no more than 30 to 40 °C.

5. Metal protective varnish composition as claimed in Claims 3 and 4, **characterised in that** the copolymerisate A has a content of
- 25 to 98.5% by weight of a1,
- 0 to 60% by weight of a2,
- 1.5 to 15% by weight of a3,
- 0 to 30% by weight of a4.

6. Metal protective varnish composition as claimed in one or more of Claims 3 to 5, **characterised in that** the component B is a solution polymerisate which comprises exclusively the constituents a1, a2 and a4.

7. Metal protective varnish composition as claimed in one or more of Claims 1 to 6, **characterised in that** with a content of less than 10% by weight of vinyl aromatics in the component A the acid number of the component A amounts to a maximum of 75 mg KOH/g of solid matter, preferably 54 to 65 mg KOH/g of solid matter, and furthermore the acid number of the mixture of the components A and B amounts a maximum of 30 mg KOH/g of solid matter, preferably 12 to 27 mg KOH/g of solid matter.

8. Metal protective varnish composition as claimed in one or more of Claims 1 to 7, **characterised in that** with a content of 10 to 60% by weight of vinyl aromatics in the component A the acid number of the component A amounts to a maximum of 95 mg KOH/g of solid matter, preferably 62 to 94 mg KOH/g of solid matter, and the acid number of the mixture of the components A and B amounts a maximum of 50 mg KOH/g of solid matter, preferably 20 to 47 mg KOH/g of solid matter.

9. Metal protective varnish composition as claimed in one or more of Claims 1 to 8, **characterised in that** it has 5 to 70% by weight, preferably 7 to 40% by weight, of the film-forming acrylate polymer.

10. Metal protective varnish composition as claimed in one or more of Claims 1 to 9, **characterised in that** the quantity of film-former used can be selected as a function of the colour of the metal protective varnish composition to be achieved.

11. Metal protective varnish composition as claimed in one or more of Claims 1 to 10, **characterised in that** it contains 10 to 95%, preferably 20 to 70% water.

12. Metal protective varnish composition as claimed in one or more of Claims 1 to 11, **characterised in that** it has a content of 0 to 55% by weight, preferably 0 to 20% by weight, of at least one water-soluble polar organic solvent.

13. Metal protective varnish composition as claimed in one or more of Claims 1 to 12, **characterised in that** it has one or several additives, such as
- at least one organic solvent which is soluble in heavy water (0 to 15% by weight, preferably 20 to 10% by weight),
- at least one pH stabiliser (0 to 2% by weight, preferably 0.2 to 1% by weight),
- fillers (up to 40% by weight),
- at least one further additive from the group including softeners, thickening agents, lubricants and/or coalescing agents (0.1 to 10% by weight).

14. Metal protective varnish composition as claimed in one or more of Claims 1 to 13, **characterised in that** it includes the thickener with wetting properties in a proportion of 0.3 to 5% by weight, preferably 0.5 to 3% by weight.

15. Use of a composition as claimed in one or more of Claims 1 to 13 for the production of a primer, coating varnish and/or for the production of a single-coat varnish.

## Revendications

1. Composition de peinture pour la protection des métaux à base aqueuse pour la fabrication d'un film fermé et séchant à l'air sur une surface de substrat, avec au moins un composant filmogène diluable à l'eau, **caractérisée en ce que** :
- elle ne contient sensiblement aucun émulsifiant,
- elle contient un épaississant ayant des propriétés mouillantes,
- le composant filmogène est une dispersion aqueuse de polymère d'acrylate, dont la part de polymère contient une proportion de
- 15 à 50 % en poids d'un composant A et
- 50 à 85 % en poids d'un composant B,
le composant A étant un copolymère diluable à l'eau qui donne une dispersion fine dans l'eau, composée d'au moins les composants :
a1 - un alkylester C₁-C₂₀ d'acide acrylique ou méthacrylique et/ou un mélange de ces esters,
a2 - le ou les monomères indiqués au point a1 et un ou plusieurs aromatiques vinyliques,
a3 - au moins un acide carbonique ou anhydride carbonique copolymérisable insaturé oléfinique, contenant jusqu'à 10 atomes de carbone,
et le composant B étant un polymère en solution qui ne contient pas de monomères contenant des groupements acides et qui se compose au moins des composants a1 et a2.

2. Composition de peinture pour la protection des métaux selon la revendication 1, **caractérisée en ce que** l'épaississant est une résine polyuréthane possédant des propriétés mouillantes.

3. Composition de peinture pour la protection des métaux selon la revendication 1 ou 2, **caractérisée en ce que** les composants A et B contiennent, comme autres ingrédients, au moins un autre composé copolymérisable (a4), l'ingrédient a4 étant un composé copolymérisable insaturé oléfinique qui n'entre pas dans les catégories a1 à a3.

4. Composition de peinture pour la protection des métaux selon une ou plusieurs des revendications 1 à 3, **caractérisée en ce que** les températures de transition vitreuse des composants A et B ne diffèrent pas de plus de 30 à 40°C.

5. Composition de peinture pour la protection des métaux selon les revendications 3 et 4, **caractérisée en ce que** le copolymère A contient une proportion de
- 25 à 98,5 % en poids de a1,
- 0 à 60 % en poids de a2,
- 1,5 à 15 % en poids de a3,
- 0 à 30 % en poids de a4.

6. Composition de peinture pour la protection des métaux selon une ou plusieurs des revendications 3 à 5, **caractérisée en ce que** le composant B est un polymère en solution qui se compose exclusivement des ingrédients a1, a2 et a4.

7. Composition de peinture pour la protection des métaux selon une ou plusieurs des revendications 1 à 6, **caractérisée en ce qu'**à une teneur de moins de 10 % en poids d'aromatiques vinyliques dans le composant A, l'indice d'acidité du composant A est au maximum de 75 mg KOH/g de solides, de préférence de 54 à 65 mg KOH/g de solides, et que l'indice d'acidité du mélange des composants A et B est en outre au maximum de 30 mg KOH/g de solides, de préférence de 12 à 27 mg KOH/g de solides.

8. Composition de peinture pour la protection des métaux selon une ou plusieurs des revendications 1 à 7, **caractérisée en ce qu'**avec une teneur de 10 à 60 % en poids d'aromatiques vinyliques dans le composant A, l'indice d'acidité du composant A est au maximum de 95 mg KOH/g de solides, de préférence de 62 à 94 mg KOH/g de solides et l'indice d'acidité du mélange des composants A et B est au maximum de 50 mg KOH/g de solides, de préférence de 20 à 47 mg KOH/g de solides.

9. Composition de peinture pour la protection des métaux selon une ou plusieurs des revendications 1 à 8, **caractérisée en ce qu'**elle contient de 5 à 70 % en poids, de préférence de 7 à 40 % en poids du polymère d'acrylate filmogène.

10. Composition de peinture pour la protection des métaux selon une ou plusieurs des revendications 1 à 9, **caractérisée en ce que** la quantité d'agent filmogène mise en oeuvre peut être choisie en fonction de la couleur voulue de la composition de peinture pour la protection des métaux.

11. Composition de peinture pour la protection des métaux selon une ou plusieurs des revendications 1 à 10, **caractérisée en ce qu'**elle contient de 10 à 95 % en poids, de préférence de 20 à 70 % en poids d'eau.

12. Composition de peinture pour la protection des métaux selon une ou plusieurs des revendications 1 à 11, **caractérisée en ce qu'**elle contient une proportion de 0 à 55 % en poids, de préférence de 0 à 20 % en poids d'au moins un solvant organique polaire hydrosoluble.

13. Composition de peinture pour la protection des métaux selon une ou plusieurs des revendications 1 à 12, **caractérisée en ce qu'**elle contient un ou plusieurs autres additifs, tels que :
- au moins un solvant organique peu soluble dans l'eau (de 0 à 15 % en poids, de préférence de 2 à 10 % en poids)
- au moins un stabilisateur de pH (de 0 à 2 % en poids, de préférence de 0,2 à 1 % en poids)
- des charges (jusqu'à 40 % en poids)
- au moins un autre additif appartenant au groupe des plastifiants, des épaississants, des lubrifiants et/ou des agents d'écoulement (de 0,1 à 10 % en poids).

14. Composition de peinture pour la protection des métaux selon une ou plusieurs des revendications 1 à 13, **caractérisée en ce qu'**elle contient l'épaississant ayant des propriétés mouillantes dans une proportion de 0,3 à 5 % en poids, de préférence de 0,5 à 3 % en poids.

15. Utilisation d'une composition selon une ou plusieurs des revendications 1 à 13 pour la fabrication d'un apprêt, d'une peinture de finition, et/ou pour la fabrication d'une peinture monocouche.
